(19) Europäisches Patentamt
European Patent Office
Office européen des brevets

(11) Veröffentlichungsnummer: **0 164 609**
**B1**

(12) # EUROPÄISCHE PATENTSCHRIFT

(45) Veröffentlichungstag der Patentschrift: **08.04.87**

(51) Int. Cl.⁴: **C 09 D 3/82**, C 08 J 5/12, C 09 D 5/16

(21) Anmeldenummer: **85106108.5**

(22) Anmeldetag: **17.05.85**

(54) **Verfahren zum Verstärken des Haftens von Elastomeren und nach diesem Verfahren hergestellte Beschichtungen.**

(30) Priorität: **17.05.84 DE 3418406**

(43) Veröffentlichungstag der Anmeldung: **18.12.85 Patentblatt 85/51**

(45) Bekanntmachung des Hinweises auf die Patenterteilung: **08.04.87 Patentblatt 87/15**

(84) Benannte Vertragsstaaten: **BE DE FR GB IT NL**

(56) Entgegenhaltungen:
**DE-A-2 643 050**
**US-A-4 043 953**
**US-A-4 431 472**
**US-A-4 439 494**

**CHEMICAL ABSTRACTS, Band 86, Nr. 20, 16. Mai 1977, Seite 98, Nr. 141788a, Columbus, Ohio, US; & JP - A - 77 04 580 (MITSUBISHI HEAVY INDUSTRIES LTD.) 04.02.1977**

(73) Patentinhaber: **WACKER- CHEMIE GMBH, Prinzregentenstrasse 22, D-8000 München 22 (DE)**

(72) Erfinder: **Wegehaupt, Karl- Heinrich, Dr. Dipl.- Chem., Marktler Strasse 78, D-8263 Burghausen (DE)**
Erfinder: **Pfeffer, Hans- Rudolf, Fischerweg 29, D-8261 Emmerting (DE)**

**EP 0 164 609 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Verfahren zum Verstärken des Haftens von Elastomeren aus durch Kondensation vernetzbaren Massen auf Grundlage von Diorganopolysiloxan, das stäbchenförmiges Mischpolymerisat enthält, das durch Mischpolymerisation von Styrol und Acrylsäureester mittels freier Radikale in Gegenwart des Diorganopolysiloxans erzeugt wurde, auf Beschichtungen auf Grundlage von Epoxydharz und Teer als Unterlage durch Auftragen einer Grundierung mit SiC-gebundenen organischen Resten auf diese Unterlage vor dem Auftragen der zum Elastomeren vernetzbaren Masse sind bereits bekannt. Hierzu wird auf US 4 431 472 (ausgegeben 14. Februar 1984, H. Höhl et al., Wacker-Chemie GmbH) verwiesen.

Aufgabe der Erfindung ist insbesondere eine besonders feste und gegenüber der Einwirkung von Wasser, insbesondere Meerwasser oder anorganische Salze enthaltendem anderen Wasser, beständige Verbindung von Organopolysiloxanelastomer der oben näher bezeichneten Art mit Beschichtungen auf Grundlage von Epoxydharz und Pech oder Teer zu erzielen. Diese Aufgabe wird durch die Erfindung gelöst.

Gegenstand der Erfindung ist ein Verfahren zum Verstärken des Haftens von Elastomeren aus durch Kondensation vernetzbaren Massen auf Grundlage von Diorganopolysiloxan, das stäbchenförmiges Mischpolymerisat enthält, das durch Mischpolymerisation von Styrol und (Meth)acrylsäureester mittels freier Radikale in Gegenwart des Diorganopolysiloxans erzeugt wurde, auf Beschichtungen auf Grundlage von Epoxydharz und Pech oder Teer als Unterlagen durch Auftragen einer Grundierung mit SiC-gebundenen organischen Resten auf diese Unterlagen vor dem Auftragen der zum Elastomeren vernetzbaren Masse dadurch gekennzeichnet, daß als Grundierung mit SiC-gebundenen organischen Resten eine Lösung von

(a) Mischpolymerisat aus (Meth)acrylsäureester, der von Si-Atomen frei ist, und (Meth)acryloxyalkylsilan mit mindestens einem SiOC-gebundenen, einwertigen organischen Rest und

(b) Silan mit einem SiC-gebundenen organischen Rest mit mindestens einer Amino- bzw. Iminogruppe und mindestens einem SiOC-gebundenen, einwertigen organischen Rest oder Teilhydrolysat von derartigem Silan oder derartiges Silan und Teilhydrolysat von derartigem Silan in organischem Lösungsmittel

verwendet wird.

Gegenstand der Erfindung sind weiterhin Beschichtungen aus Epoxydharz und Pech oder Teer, die über einer Grundierung mit SiC-gebundenen organischen Resten auf diesen Beschichtungen einen Überzug aus zu einem Elastomer durch Kondensation vernetzter Masse auf Grundlage von Diorganopolysiloxan, das stäbchenförmiges Mischpolymerisat enthält, das durch Mischpolymerisation von Styrol und (Meth)acrylsäureester mittels freier Radikale in Gegenwart des Diorganopolysiloxans erzeugt wurde, aufweisen, dadurch gekennzeichnet, daß die Grundierung mit SiC-gebundenen organischen Resten aus einer Lösung von

(a) Mischpolymerisat aus (Meth)acrylsäureester, der von Si-Atomen frei ist, und (Meth)acryloxyalkylsilan mit mindestens einem SiOC-gebundenen, einwertigen, organischen Rest und

(b) Silan mit einem SiC-gebundenen organischen Rest mit mindestens einer Amino- bzw. Iminogruppe und mindestens einem SiOC-gebundenen, einwertigen organischen Rest oder Teilhydrolysat von derartigem Silan oder derartiges Silan und Teilhydrolysat von derartigem Silan

in organischem Lösungsmittel

erzeugt wurde.

Beschichtungen aus Epoxydharz und Pech oder Teer bzw. die zur Herstellung derartiger Beschichtungen verwendeten Mischungen sind beispielsweise in "Ullmanns Enzyklopädie der technischen Chemie" 3. Auflage, Band 16, München-Berlin 1965, Seite 696 bzw. in den dort benannten Druckschriften eingehender beschrieben. Sie sind beispielsweise von den Firmen Berger Protection, New Castle GB; W. u. J. Leigh & Co., Bolton GB; und Hempel's Marine Paints A/S, Lyngby, DK, erhältlich.

Beschichtungen aus Epoxydharz und Pech oder Teer können sich insbesondere auf Metallen, wie Stahl oder Eisen befinden, die z.B. in Form von Schiffsrümpfen, Bojen, Seeminen, Pfeilern von Bohrinseln oder Brücken, Behältern, einschließlich Badebecken oder Rohrleitungen vorliegen können.

Die (Meth)acrylsäureester, die von Si-Atomen frei sind und einen Teil der Monomeren bilden, durch deren Mischpolymerisation der Bestandteil (a) der erfindungsgemäßen Grundierungen hergestellt wird, sind vorzugsweise solche der Formel

$(H_2C=CRCOO)_nR^1$,

worin n 1 oder 2, R Wasserstoff oder der Methylrest, vorzugsweise der Methylrest, und $R^1$ ein von aliphatischen Mehrfachbindungen freier Kohlenwasserstoffrest mit 1 bis 10 Kohlenstoffatomen ist, der einwertig ist, wenn n den Wert 1 hat, und zweiwertig ist, wenn n den Wert 2 hat. Vorzugsweise ist $R^1$ ein Alkylrest.

Besonders bevorzugt als (Meth)acrylsäureester die von Si-Atomen frei sind, sind Methylmethacrylat und n-Butylmethacrylat.

Es kann eine Art von (Meth)acrylsäureester, der von Si-Atomen frei ist, zur Herstellung von Bestandteil (a) verwendet werden. Es können aber auch Gemische aus mindestens zwei verschiedenen Arten von (Meth)acrylsäureestern die von Si-Atomen frei sind, wie Gemische aus Methylmethacrylat und n-Butylmethacrylat zur Herstellung von Bestandteil (a) verwendet werden.

Vorzugsweise werden 4 bis 20 Gewichtsteile (Meth)acrylsäureester der von Si-Atomen frei ist, je Gewichtsteil (Meth)acryloxyalkylsilan eingesetzt.

Vorzugsweise sind die (Meth)acryloxyalkylsilane mit mindestens einem SiOC-gebundenen, einwertigen,

organischen Rest je Molekül solche der Formel

$H_2C=CRCOOR^2R^3_mSi(OR^4)_{3i-m}$,

worin R die oben dafür angegebene Bedeutung hat, $R^2$ einen Alkylenrest mit 1 bis 6 Kohlenstoffatomen, $R^3$ einen einwertigen Kohlenwasserstoffrest mit 1 bis 6 Kohlenstoffatomen und $R^4$ einen Alkylrest mit 1 bis 5 Kohlenstoffatomen bedeutet und m 0, 1 oder 2, vorzugsweise 0 ist.

Vorzugsweise ist auch in den Silanen der oben angegebenen Formel R der Methylrest.

Besonders bevorzugt als Alkylenrest $R^2$ ist der Rest der Formel $-(CH_2)_3-$. Weitere Beispiele für Reste $R^2$ sind solche der Formeln

$-(CH_2)_2$

$-(CH_2)_4$

$-(CH_2)_5$

$-CH_2(CH_3)_2CCH_2$

$-CH_2CH(CH_3)CH_2-$ und

$-CH_2CH(CH_3)-$.

Vorzugsweise ist auch ein Kohlenwasserstoffrest $R^3$ , wenn vorhanden frei von aliphatischen Mehrfachbindungen. Besonders bevorzugt als Rest $R^3$ ist der Methylrest wenn m nicht 0 ist. Ein weiteres Beispiel für einen Kohlenwasserstoffrest $R^3$ ist der Phenylrest.

Beispiele für Alkylreste $R^4$ sind der Methyl-, Ethyl-, n-Propyl-, Isopropyl-, n-Butyl-, sec.-Butyl- und der n-Pentylrest.

Besonders bevorzugt als Silane der oben angegebenen Formel sind gamma-Methacryloxypropyltrimethoxysilan und gamma-Methacryloxypropyltriethoxysilan.

Es kann eine Art von Silan der oben angegebenen Formel zur Herstellung von Bestandteil (a) verwendet werden. Es kann aber auch ein Gemisch aus mindestens zwei verschiedenen Arten derartiger Silane zur Herstellung von Bestandteil (a) verwendet werden.

Die Herstellung der Mischpolymerisate (a) kann in für die Mischpolymerisation von olefinischen Monomeren an sich bekannter Weise durch Mischpolymerisation von (Meth)acrylsäureester, der von Si-Atomen frei ist, und (Meth)acryloxyalkylsilan mit mindestens einem SiOC-gebundenen, einwertigen organischen Rest mittels freier Radikale, wie sie z.B. von Persäureestern, wie tert.-Butylperoktoat, beim Erwärmen gebildet werden, durch Erwärmen zum Sieden unter Rückfluß, vorzugsweise in einem gegenüber den Monomeren, Mischpolymerisaten und Radikalen inerten Lösungsmittel, wie Toluol, erfolgen.

Die Silane (b) mit einem SiC-gebundenen, organischen Rest je Molekül, der mindestens eine Amino- bzw. Iminogruppe aufweist, und mindestens einem SiOC-gebundenen, einwertigen organischen Rest je Molekül sind vorzugsweise solche der Formel

$R^5NHR^2Si(OR^6)_3$

worin $R^2$ die oben dafür angegebene Bedeutung hat, $R^5$ Wasserstoff oder eine Gruppe der Formel $H_2N(CH_2)_p$ - (p = 2 oder 3) und $R^6$ einen einwertigen, gegebenenfalls durch eine Amino- oder Alkoxygruppe substituierten Kohlenwasserstoffrest mit insgesamt 1 bis 10 Kohlenstoffatomen je Rest bedeutet.

Als Rest $R^5$ ist der Rest der Formel $H_2N(CH_2)_2-$ besonders bevorzugt.

Die oben angegebenen Beispiele für Reste $R^2$ in den Acryloxyalkylsilanen gelten alle auch für die Reste $R^2$ in den Silanen (b).

Vorzugsweise ist $R^6$ ein Alkylrest mit 1 bis 5 Kohlenstoffatomen.

Beispiele für Silane (b) sind N-beta-Aminoethyl-gamma-aminopropyltriethoxysilan, also die Verbindung der Formel

$H_2N(CH_2)_2NH(CH_2)_3Si(OC_2H_5)_3$

N-beta-Aminoethyl-gamma-aminopropyltrimethoxysilan, also die Verbindung der Formel

$H_2N(CH_2)_2NH(CH_2)_3Si(OCH_3)_3$

beta-Aminoethyltriethoxysilan, also die Verbindung der Formel

$H_2N(CH_2)_2Si(OC_2H_5)_3$

die Verbindung der Formel

$H_2N(CH_2)_2NH(CH_2)_3Si(OCH_2CH_2NH_2)_3$

N-beta-Aminoethyl-delta-aminobutyltriethoxysilan, also die Verbindung der Formel

$H_2N(CH_2)_2NH(CH_2)_4Si(OC_2H_5)_3$

gamma-Aminopropyltriethoxysilan, also die Verbindung der Formel

$H_2N(CH_2)_3Si(OC_2H_5)_3$

Aminomethyltrimethoxysilan, also die Verbindung der Formel

$H_2NCH_2Si(OC_2H_5)_3$

N-beta-Aminoethyl-gamma-aminopropyltris-(methoxy-ethylenoxy)silan, also die Verbindung der Formel

$H_2N(CH_2)_2NH(CH_2)_3Si(OCH_2CH_2OCH_3)_3$ und

delta-Aminobutyltriethoxysilan, also die Verbindung der Formel

$H_2N(CH_2)_4Si(OC_2H_5)_3$

Es kann eine Art von Silan (b) verwendet werden. Es kann aber auch ein Gemisch aus mindestens zwei verschiedenen Arten von Silan (b) verwendet werden.

Vorzugsweise wird Mischpolymerisat (a) in Mengen von 5 bis 35 Gewichtsteilen je Gewichtsteil Silan (b) verwendet.

Bei der Bereitung der erfindungsgemäß als Grundierungen verwendeten Lösungen können beliebige organische Lösungsmittel verwendet werden, die gegenüber den Beschichtungen aus Epoxydharz und Pech oder Teer und den Bestandteilen (a) und (b) in chemischer Hinsicht inert sind und bei Raumtemperatur innerhalb wirtschaftlich verttetbarer Zeit verdampfen. Bevorzugt ist ein Gemisch aus 15 bis 35 Gewichtsprozent Toluol, 50 bis 85 Gewichtsprozent Isobutanol und 0 bis 10 Gewichtsprozent Aceton, wobei die Summe der jeweils innerhalb dieser Bereiche gewählten Prozentsätze 100 Gewichtsprozent beträgt.

Vorzugsweise beträgt das Gesamtgewicht der Bestandteile (a) und (b) 8 bis 20 Gewichtsprozent ihrer jeweiligen Lösung.

Das Auftragen der Lösung von Bestandteil (a) und (b) auf die Beschichtung aus Epoxydharz und Pech oder Teer kann z.B. durch Streichen, Gießen, Sprühen oder Aufwalzen erfolgen.

Nach dem Verdampfen des Lösungsmittels wird die zum Elastomeren durch Kondensation vernetzbare Masse auf Grundlage von Diorganopolysiloxan, das stäbchenförmiges Mischpolymerisat enthält, das durch Mischpolymerisation von Styrol und (Meth)acrylsäureester mittels freier Radikale in Gegenwart des Diorganopolysiloxans erzeugt wurde auf die Grundierung aufgetragen. Dieses Auftragen kann ebenfalls z.B. durch Streichen, Gießen, Sprühen oder Aufwalzen erfolgen.

Die Herstellung von zu Elastomeren durch Kondensation vernetzbaren Massen auf Grundlage von Diorganopolysiloxan, das stäbchenförmiges Mischpolymerisat enthält, das durch Mischpolymerisation von Styrol und (Meth)acrylsäureester mittels freier Radikale in Gegenwart des Diorganopolysiloxans erzeugt wurde, ist bereits vielfach beschrieben worden und muß daher hier nicht näher erläutert werden. Diese Herstellung ist z.B. in US 3 555 109 (veröffentlicht 12. Januar 1971, I.C. Getson, Stauffer-Wacker-Silicone Corporation), US 3 776 875 (veröffentlicht 4. Dezember 1973, I.C. Getson, Stauffer-Chemical Company) und US 4 032 499 (veröffentlicht 28. Juni 1977, F.-H. Kreuzer et al. Consortium für elektrochemische Industrie GmbH) eingehend beschrieben. Derartige Massen sind im Handel erhältlich.

Vorzugsweise bestehen die stäbchenförmigen Mischpolymerisate, die in Gegenwart des Diorganopolysiloxans durch Mischpolymerisation mittels freier Radikale erzeugt wurden, zu 35 bis 70 Gewichtsprozent aus sich von Styrol ableitenden Einheiten und zum Rest aus sich von (Meth)acrylsäureester ableitenden Einheiten.

Vorzugsweise beträgt die Menge von Diorganopolysiloxan 20 bis 80 Gewichtsprozent, bezogen auf das Gesamtgewicht von Diorganopolysiloxan und Mischpolymerisat aus Styrol und (Meth)acrylsäureester.

Besonders bevorzugt als stäbchenförmige Mischpolymerisate die in Gegenwart des Diorganopolysiloxans erzeugt wurden, sind solche aus Styrol und n-Butylacrylat. Das n-Butylacrylat kann aber auch mindestens teilweise durch z.B. Methylacrylat, Ethylacrylat, n-Propylacrylat, Isopropylacrylat, sec.-Butylacrylat, Methylmethacrylat, Ethylmethacrylat, n-Propylmethacrylat, Isopropylmethacrylat und/oder sec.-Butylmethacrylat ersetzt sein.

Insbesondere wegen der leichteren Zugänglichkeit sind vorzugsweise mindestens 80 % der Anzahl der organischen Reste der Diorganosiloxaneinheiten Methylreste.

Vorzugsweise haben die Diorganopolysiloxane, in deren Gegenwart stäbchenförmiges Mischpolymerisat aus Styrol und (Meth)acrylsäureester erzeugt wurde vor dieser Mischpolymerisation eine durchschnittliche Viskosität von 150 bis 6000 mPa.s bei 25° C.

Bei den bei dem erfindungsgemäßen Verfahren und zur Herstellung der erfindungsgemäßen Beschichtungen eingesetzten, zu Elastomeren durch Kondensation vernetzbaren Massen kann es sich um sogenannte Einkomponentensysteme, also um Mischungen handeln, die in fertig gemischter Form in den Handel gebracht werden, oder um sogenannte Zweikomponentensysteme handeln die aus mindestens zwei Komponenten mehr oder weniger unmittelbar vor dem Auftragen auf die grundierten Beschichtungen aus Epoxydharz und Pech oder Teer bereitet werden.

Bei den Einkomponentensystemen sind solche, zu deren Bereitung als Vernetzungsmittel Siliciumverbindungen, die insgesamt mindestens drei über Stickstoff an Silicium gebundene Aminogruppen und/oder über Sauerstoff an Silicium gebundene Oximgruppen je Mol aufweisen, oder andere bei der Vernetzung basische Stoffe abspaltende Siliciumverbindungen oder bei der Vernetzung neutrale Stoffe abspaltende Siliciumverbindungen verwendet worden sind, bevorzugt. Beispiele für derartige bevorzugte Vernetzungsmittel für die Bereitung von Einkomponentensysteme sind Methyltris-(methylethylketoxim)-silan und das Silan der Formel

$Si(OCH_2COO\text{-}n\text{-}C_4H_9)_4$

Bei den Zweikomponentensystemen sind solche, zu deren Bereitung als Vernetzungsmittel Siliciumverbindungen, die bei der Vernetzung Alkohole abspalten, bevorzugt. Derartige Ein- und Zweikomponentensysteme sind allgemein bekannt.

Zusätzlich zu durch Kondensation vernetzbarem Diorganopolysiloxan und in Gegenwart von diesem Diorganopolysiloxan erzeugtem Mischpolymerisat aus Styrol und (Meth)acrylsäureester sowie Vernetzungsmittel und gegebenenfalls Vernetzungskatalysator können die bei dem erfindungsgemäßen Verfahren und zur Herstellung der erfindungsgemäßen Beschichtungen eingesetzten, zu Elastomeren durch Kondensation vernetzbaren Massen gegebenenfalls weitere Stoffe enthalten. Beispiele für solche weiteren Stoffe sind anorganische Füllstoffe, wie pyrogen erzeugtes Siliciumdioxyd oder Diatomeenerde, Lösungsmittel, wie Alkangemische mit einem Siedebereich von 80 bis 110°C bei 1013 hPa (abs.) oder Toluol, Pigmente, wie Aluminiumpulver, Weichmacher, wie durch Trimethylsiloxygruppen en blockierte Diorganopolysiloxane mit einer durchschnittlichen Viskosität von 50 bis 10 000 mPa.s bei 25°C, sowie

Epoxydharze. Enthalten die Massen Epoxydharze so vorzugsweise in Mengen von 3 bis 6 Gewichtsprozent, bezogen auf das Gesamtgewicht von Diorganopolysiloxan und in Gegenwart von diesem Diorganopolysiloxan erzeugtem Mischpolymerisat.

Der Überzug aus zu einem Elastomer durch Kondensation vernetzter Masse auf Grundlage von Diorganopolysiloxan, das stäbchenförmiges Mischpolymerisat enthält, das durch Mischpolymerisation von Styrol und (Meth)acrylsäureester mittels freier Radikale in Gegenwart des Diorganopolysiloxans erzeugt wurde, ist besonders abweisend gegenüber Lebewesen, die im Wasser einen Bewuchs auf Oberflächen erzeugen können, wenn er als weiteren Bestandteil Stoff, der nach dem Vernetzen noch fließfähig bei Raumtemperatur ist, enthält (vgl. European Patent Application 00 32 597, veröffentlicht 29. Juli 1981 Shell International Research Maatschapij B.V.).

Die wichtigsten Beispiele für derartige Stoffe sind außer den oben bereits als Weichmacher genannten durch Trimethylsiloxygruppen endblockierten Diorganopolysiloxanen bei Raumtemperatur flüssige Paraffine, Schmieröle, Polyisobutylene mit einem Molekulargewicht von 350 oder etwa 350, technisches Weißöl sowie Trikresylphosphat.

Stoff, der nach dem Vernetzen der Organopolysiloxanmasse zum Elastomeren noch fließfähig ist, ist in dieser Masse vorzugsweise in Mengen von 10 bis 80 Gewichtsprozent, bezogen auf das Gesamtgewicht von solchem Stoff zu vernetzendem Organopolysiloxan und stäbchenförmigem Mischpolymerisat aus Styrol und (Meth)acrylsäureester, vorhanden.

In den folgenden Beispielen beziehen sich alle Angaben von Teilen und Prozentsätzen auf das Gewicht, soweit nichts anderes angegeben ist.

**Beispiel 1**

a) Eine wasserfreie Mischung aus 20 Teilen Methylmethacrylat, 20 Teilen n-Butylmethacrylat, 5 Teilen gamma-Methacryloxypropyltrimethoxysilan, 70 Teilen Toluol und 0,5 Teilen tert.-Butylperoktoat wird 8 Stunden zum Sieden unter Rückfluß erwärmt. Nach dem Abkühlen wird das so erhaltene Gemisch zunächst mit 300 Teilen Isobutanol und dann mit 8 Teilen N-beta-Aminoethyl-gamma-aminopropyltriethoxysilan vermischt.

b) Die so erhaltene farblose Lösung wird auf Eisenblech mit den Abmessungen 50 mm x 135 mm x 1 mm, das mit Epoxydharz und Pech oder Teer ("Epilux 5" - bei der Bezeichnung "Epilux" dürfte es sich um ein Registriertes Warenzeichen handeln der Firma Berger Protection, New Castle, GB-Verhältnis Aktivierungsmittel zum Rest der Bestandteile = 1:4) in einer Dicke von 120 mikrometer beschichtet war, nach 8 Stunden bei 22°C Trocknenlassen dieser Beschichtung auf diese Beschichtung als Grundierung aufgestrichen.

c) 3 Stunden nach Aufbringen dieser Grundierung, wonach die Lösungsmittel, aus denen diese Grundierung aufgebracht wurde, verdampft waren, wurde eine zu einem Elastomeren vernetzbare Masse aufgesprüht, die wie folgt hergestellt wurde:

alpha) In einem Polymerisationsgefäß mit einem Innendurchmesser von 312 mm und einer Höhe von 600 mm, das mit einem mit 200 Undrehungen je Minute betriebenen Ankerrührer mit einer Breite von 295 mm an der breitesten Stelle, Gaseinleitungsrohr und Rückflußkühler ausgestattet ist, wurde unter Stickstoff ein Gemisch aus 5,2 kg (50 Mol) Styrol, 4,2 kg (33 Mol) n-Butylacrylat, 4,04 kg in den endständigen Einheiten je eine Sigebundene Hydroxylgruppe aufweisendes Dimethylpolysiloxan mit einer Viskosität von 430 mPa.s bei 25°C, 0,8 kg Wasser und 0,141 kg 1,1-Di-tert.-butylperoxy-3,3,5-trimethyl-cyclohexan mittels eines bei 100°C gehaltenen Wasserdampfmantels 7 Stunden erwärmt.

Zur Entfernung von nicht-umgesetzten Monomeren und von Wasser wurde zunächst bei 100°C bis 130°C Stickstoff durch das Reaktionsgemisch geblasen und dann das Reaktionsgemisch 3 Stunden bei 16 hPa (abs.) auf 130°C erwärmt.

Das so erhaltene Diorganopolysiloxan, das stäbchenförmiges Mischpolymerisat enthält, das durch Mischpolymerisation von Styrol und n-Butylacrylat mittels freier Radikale in Gegenwart des Diorganopolysiloxans erzeugt wurde, hat eine Viskosität von 45 000 mPa.s bei 25°C und eine Bruttozusammensetzung von 30 % Dimethylpolysiloxan, 31,5 % sich von n-Butylacrylat ableitenden Einheiten und 38,5 % sich von Styrol ableitenden Einheiten.

beta) 65 Teile dieses Diorganopolysiloxans wurden mit 16 Teilen eines durch Trimethylsiloxygruppen endblockierten Dimethylpolysiloxans mit einer Viskosität von 350 mPa.s bei 25°C, 21 Teilen Alkangemisch mit einem Siedebereich von 80 bis 110°C bei 1013 hPa (abs.) und 1 Teil pyrogen erzeugtem Siliciumdioxyd mit einer BET-Oberfläche von 200 $m^2/g$ und kurz vor dem Auftragen auf die grundierte Unterlage mit 3 Teilen eines Gemisches aus 1 Teil der Verbindung der Formel

$$Si\left[OSn(n-C_4H_9)_2OOCCH_3\right]_4$$

und 3 Teilen Tetra-n-propylsilikat vermischt.

Die Dicke des Elastomeren, das durch Vernetzen der bei Stufe c) aufgesprühten Masse gebildet wird, beträgt 0,5 bis 0,7 mm.

**Beispiel 2**

Die in Beispiel 1 beschriebene Arbeitsweise wird wiederholt mit der Abänderung, daß in Stufe a) anstelle der 0,5 Teile tert.-Butylperoktoat 0,5 Teile tert.-Butylperisononanoat (flüssig), 270 Teile Isobutanol und 35 Teile Aceton anstelle der 300 Teile Isobutanol und 2 Teile N-beta-Aminoethyl-gamma-aminopropyltriethoxysilan anstelle der 8 Teile dieses Silans verwendet werden.

**Beispiel 3**

Die in Beispiel 1 beschriebene Arbeitsweise wird wiederholt mit der Abänderung, daß in Stufe b) als Epoxydharz und Pech oder Teer ein anderes Handelsprodukt ("Epigrip"G. 876" - bei der Bezeichnung "Epigrip" dürfte es sich um ein Registriertes warenzeichen handeln - der Firma W. u. J. Leigh & Co., Bolton, GB) verwendet wird.

**Beispiel 4**

Die in Beispiel 1 beschriebene Arbeitsweise wird wiederholt mit der Abänderung, daß in Stufe c) 16 Teile Polyisobutylen mit einem Molekulargewicht von 340 anstelle der 16 Teile des durch Trimethylsiloxygruppen endblockierten Dimethylpolysiloxans verwendet werden.

**Beispiel 5**

Die in Beispiel 1 beschriebene Arbeitsweise wird wiederholt mit der Abänderung, daß in Stufe c) beta) wie folgt gearbeitet wurde: 65 Teile des stäbchenförmiges Mischpolymerisat enthaltenden Diorganopolysiloxans wurden mit 8 %, bezogen auf sein Gewicht Methyltris-(methylketoxim)-silan und 0,1 %, bezogen auf sein Gewicht, Di-n-butylzinndiacetat und danach mit 16 Teilen des durch Trimethylsiloxygruppen endblockierten Dimethylpolysiloxans mit einer Viskosität von 350 mPa.s bei 25°C, 21 Teilen Alkangemisch mit einem Siedebereich von 80 bis 110°C bei 1013 hPa (abs.) und 1 Teil pyrogen erzeugtem Siliciumdioxyd mit einer BET-Oberfläche von 200 $m^2/g$ vermischt.

**Beispiel 6**

Die in Beispiel 3 angegebene Arbeitsweise wird wiederholt mit der Abänderung, daß in Stufe c) 16 Teile Polyisobutylen mit einem Molekulargewicht von 340 anstelle der 16 Teile des durch Trimethylsiloxygruppen endblockierten Dimethylpolysiloxans verwendet werden.

**Beispiel 7**

Die in Beispiel 2 angegebene Arbeitsweise wird wiederholt mit der Abänderung, daß in Stufe b) als Epoxydharz und Pech oder Teer das in Beispiel 3 näher bezeichnete Handelsprodukt verwendet wird.

**Beispiel 8**

Die in Beispiel 2 angegebene Arbeitsweise wird wiederholt mit der Abänderung, daß in Stufe c) 16 Teile Polyisobutylen mit einem Molekulargewicht von 340 anstelle der 16 Teile des durch Trimethylsiloxygruppen endblockierten Dimethylpolysiloxans verwendet werden.

**Beispiel 9**

Die in Beispiel 2 angegebene Arbeitsweise wird wiederholt mit den Abänderungen, daß in Stufe b) als Epoxydharz und Pech oder Teer das in Beispiel 3 näher bezeichnete Handelsprodukt und 16 Teile

Polyisobutylen mit einem Molekulargewicht von 340 anstelle der 16 Teile des durch Trimethylsiloxygruppen endblockierten Dimethylpolysiloxans verwendet werden.

Die gemäß allen Beispielen 1 bis 9 überzogenen Eisenplatten werden zunächst 6 Tage an der Luft, dann 3 Wochen in synthetischem Meerwasser bei Raumtemperatur und schließlich 2 Wochen bei 70° C in diesem synthetischen Meerwasser aufbewahrt. Trotz dieser Lagerungsbedingungen ist nach dieser Aufbewahrung bei keiner der überzogenen Eisenplatten ein Abtrennen der Elastomerschicht von der Unterlage ohne Beschädigung der Elastomerschicht oder der Schicht aus Epoxydharz und Pech möglich.

**Patentansprüche**

1. Verfahren zum Verstärken des Haftens von Elastomeren aus durch Kondensation vernetzbaren Massen auf Grundlage von Diorganopolysiloxan, das stäbchenförmiges Mischpolymerisat enthält, das durch Mischpolymerisation von Styrol und (Meth)acrylsäureester mittels freier Radikale in Gegenwart des Diorganopolysiloxans erzeugt wurde auf Beschichtungen auf Grundlage von Epoxydharz und Pech oder Teer als Unterlagen durch Auftragen einer Grundierung mit SiC-gebundenen organischen Resten auf diese Unterlagen vor dem Auftragen der zum Elastomeren vernetzbaren Masse,

dadurch gekennzeichnet, daß als Grundierung mit SiC-gebundenen organischen Resten eine Lösung von

(a) Mischpolymerisat aus (Meth)acrylsäureester, der von Si-Atomen frei ist, und (Meth)acryloxyalkylsilan mit mindestens einem SiOC-gebundenen einwertigen organischen Rest und

(b) Silan mit einem SiC-gebundenen organischen Rest mit mindestens einer Amino- bzw. Iminogruppe und mindestens einem SiOC-gebundenen, einwertigen organischen Rest oder Teilhydrolysat von derartigem Silan oder derartiges Silan und Teilhydrolysat von derartigem Silan in organischem Lösungsmittel verwendet wird.

2. Beschichtungen aus Epoxydharz und Pech oder Teer die über einer Grundierung mit SiC-gebundenen organischen Resten auf diesen Beschichtungen einen Überzug aus zu einem Elastomer durch Kondensation vernetzter Masse auf Grundlage von Diorganopolysiloxan, das stäbchenförmiges Mischpolymerisat enthält, das durch Mischpolymerisation von Styrol und (Meth)acrylsäureester mittels freier Radikale in Gegenwart des Diorganopolysiloxans erzeugt wurde, aufweisen,

dadurch gekennzeichnet, daß die Grundierung mit SiC-gebundenen organischen Resten aus einer Lösung von

(a) Mischpolymerisat aus (Meth)acrylsäureester der von Si-Atomen frei ist und (Meth)acryloxyalkylsilan mit mindestens einem SiOC-gebundenen, einwertigen organischen Rest und

(b) Silan mit einem SiC-gebundenen organischen Rest mit mindestens einer Amino- bzw. Iminogruppe und mindestens einem SiOC-gebundenen, einwertigen organischen Rest oder Teilhydrolysat von derartigem Silan oder derartiges Silan und Teilhydrolysat von derartigem Silan in organischem Lösungsmittel erzeugt wurde.

3. Verfahren nach Anspruch 1 oder Beschichtung nach Anspruch 2,

dadurch gekennzeichnet, daß zur Herstellung von Mischpolymerisat (a) als (Meth)acrylsäureester der von Si-Atomen frei ist, solcher der Formel

$(H_2C=CRCOO)_nR^1$

worin n 1 oder 2, R Wasserstoff oder der Methylrest, und $R^1$ ein Kohlenwasserstoffrest mit 1 bis 10 Kohlenstoffatomen ist, der einwertig ist, wenn n den Wert 1 hat und zweiwertig ist, wenn n den Wert 2 hat, verwendet worden ist.

4. Verfahren nach Anspruch 1 oder 3 oder Beschichtung nach Anspruch 2 oder 3,

dadurch gekennzeichnet, daß zur Herstellung von Mischpolymerisat (a) als (Meth) acryloxyalkylsilan solches der Formel

$H_2C=CRCOOR^2R^3{}_mSi(OR^4)_{3-m}$

worin R die oben in Anspruch 3 dafür angegebene Bedeutung hat, $R^2$ einen Alkylenrest mit 1 bis 6 Kohlenstoffatomen, $R^3$ einen ein wertigen Kohlenwasserstoffrest mit 1 bis 6 Kohlenstoffatomen und $R^4$ einen Alkylrest mit 1 bis 5 Kohlenstoffatomen bedeutet und m 0, 1 oder 2 ist, verwendet worden ist.

5. Verfahren nach Anspruch 1,3 oder 4 oder Beschichtung nach Anspruch 2, 3 oder 4,

dadurch gekennzeichnet, daß zur Herstellung von Bestandteil (a) 4 bis 20 Gewichtsteile (Meth)acrylsäureester, der von Si-Atomen frei ist, je Gewichtsteil Methacryloxyalkylsilan eingesetzt worden sind.

6. Verfahren nach Anspruch 1 oder mindestens einem der Ansprüche 3 bis 5 oder Beschichtung nach Anspruch 2 oder mindestens einem der Ansprüche 3 bis 5,

dadurch gekennzeichnet, daß als Silan (b) solches der Formel

$R^5NHR^2\,Si(OR^6)_3$

worin $R^2$ die oben in Anspruch 4 dafür angegebene Bedeutung hat, $R^5$ Wasserstoff oder eine Gruppe der Formel $H_2N(CH_2)_p$ - (P=2 oder 3) und $R^6$ einen einwertigen, gegebenenfalls durch eine Amino- oder Alkoxygruppe substituierten Kohlenwasserstoffrest mit insgesamt 1 bis 10 Kohlenstoffatomen je Rest bedeutet, verwendet wird.

7. Verfahren nach Anspruch 1 oder mindestens einem der Ansprüche 3 bis 6 oder Beschichtung nach mindestens einem der Ansprüche 2 bis 6,

dadurch gekennzeichnet, daß Mischpolymerisat (a) in Mengen von 5 bis 35 Gewichtsteilen je Gewichtsteil

Silan (b) verwendet wird.

8. Verfahren nach Anspruch 1 oder mindestens einem der Ansprüche 3 bis 7 oder Beschichtung nach Anspruch 2 oder mindestens einem der Ansprüche 3 bis 7,

dadurch gekennzeichnet, daß als organisches Lösungsmittel ein Gemisch aus Toluol, Isobutanol und gegebenenfalls Aceton verwendet wird.

**Claims**

1. Process for strengthening the adhesion of elastomers comprising compositions that can be cross-linked by condensation and are based on a diorganopolysiloxane containing a rod-shaped copolymer produced by copolymerisation of styrene and a (meth)acrylate by means of free radicals in the presence of the diorganopolysiloxane, to coatings based on epoxy resin and pitch or tar as substrates, by applying to those substrates, before the application of the composition that can be cross-linked to form the elastomer, a primer containing SiC-bonded organic radicals,

characterised in that

there is used as the primer containing SiC-bonded organic radicals a solution in an organic solvent of

(a) a copolymer of a (meth)acrylate that is free of Si atoms and a (meth)acryloxyalkylsilane containing at least one SiOC-bonded, monovalent, organic radical, and

(b) a silane containing an SiC-bonded organic radical that contains at least one amino or imino group and at least one SiOC-bonded, monovalent, organic radical, or a partial hydrolysate of such a silane, or such a silane and a partial hydrolysate of such a silane.

2. Coatings of epoxy resin and pitch or tar that have, over a primer containing SiC-bonded organic radicals on those coatings, a covering of a composition that is cross-linked by condensation to form an elastomer and is based on a diorganopolysiloxane containing a rod-shaped copolymer produced by copolymerisation of styrene and a (meth)acrylate by means of free radicals in the presence of the diorganopolysiloxane,

characterised in that

the primer containing SiC-bonded organic radicals is produced from a solution in an organic solvent of

(a) a copolymer of a (meth)acrylate that is free of Si atoms and a (meth)acryloxyalkylsilane containing at least one SiOC-bonded, monovalent, organic radical, and

(b) a silane containing an SiC-bonded organic radical that contains at least one amino or imino group and at least one SiOC-bonded, monovalent, organic radical, or a partial hydrolysate of such a silane, or such a silane and a partial hydrolysate of such a silane.

3. Process according to claim 1 or coating according to claim 2,

characterised in that

the (meth)acrylate free of Si atoms used in the manufacture of copolymer (a) is a (meth)acrylate of the formula

$(H_2C{=}CRCOO)_nR^1$

wherein n is 1 or 2, R is hydrogen or the methyl radical and $R^1$ is a hydrocarbon radical having from 1 to 10 carbon atoms that is monovalent if n is 1 and divalent if n is 2.

4. Process according to claim 1 or 3 or coating according to claim 2 or 3,

characterised in that

the (meth)acryloxyalkylsilane used in the manufacture of copolymer (a) is a silane of the formula

$H_2C{=}CRCOOR^2R^3_mSi(OR^4)_{3-m}$

wherein R has the meaning given above in claim 3, $R^2$ represents an alkylene radical having from 1 to 6 carbon atoms, $R^3$ represents a monovalent hydrocarbon radical having from 1 to 6 carbon atoms and $R^4$ represents an alkyl radical having from 1 to 5 carbon atoms, and m is 0, 1 or 2.

5. Process according to claim 1, 3 or 4 or coating according to claim 2, 3 or 4,

characterised in that

for the manufacture of component (a), from 4 to 20 parts by weight of (meth)acrylate that is free of Si atoms are used per part by weight of methacryloxyalkylsilane.

6. Process according to claim 1 or at least one of claims 3 to 5 or coating according to claim 2 or at least one of claims 3 to 5,

characterised in that

there is used as the silane (b) a silane of the formula

$R^5NHR^2Si(OR^6)_3$

wherein $R^2$ has the meaning given above in claim 4, $R^5$ represents hydrogen or a group of the formula $H_2N(CH_2)_p$ - (p = 2 or 3) and $R^6$ represents a monovalent hydrocarbon radical that is optionally substituted by an amino or alkoxy group and contains a total of from 1 to 10 carbon atoms per radical.

7. Process according to claim 1 or at least one of claims 3 to 6 or coating according to at least one of claims 2 to 6,

characterised in that

copolymer (a) is used in amounts of from 5 to 35 parts by weight per part by weight of silane (b).

8. Process according to claim 1 or at least one of claims 3 to 7 or coating according to claim 2 or at least one

of claims 3 to 7,
characterised in that
there is used as the organic solvent a mixture of toluene, isobutanol and, optionally, acetone.

**Revendications**

1. Procedé pour renforcer l'adhérence d'élastomères en des matières réticulables par condensation à base de polydiorganosiloxane, contenant du copolymère en forme de bâtonnets, qui a été obtenu par copolymérisation de styrène et d'un ester d'acide (méth)acrylique à l'aide de radicaux libres en présence du polydiorganosiloxane, sur des enduits de revêtement à base d'une résine époxyde et de brai ou de goudron comme subjectile par application sur ces subjectiles, avant l'application de la matière réticulable en des élastomères, d'un primaire d'apprêt comportant des restes organiques fixés à SiC, procédé caractérisé en ce qu'on utilise comme primaire d'apprêt comportant des restes organiques fixés sur SiC, une solution de:

(a) un copolymère d'un ester d'acide (méth)acrylique, dépourvu d'atomes de Si, et du (méth)acryloxyalkylsilane comportant au moins un reste organique monovalent lié à Si par l'intermédiaire de SiOC, et

(b) un silane comportant un reste organique lié à SiC et comportant au moins un groupe amino ou imino et au moins un reste organique monovalent lié à SiOC ou un hydrolysat partiel d'un tel silane ou un tel silane et un hydrolysat partiel d'un tel silane, dans un solvant organique.

2. Enduits de revêtement, formés d'une résine époxyde et de brai ou de goudron, qui présentent sur un primaire d'apprêt comportant des restes organiques liés à SiC sur ces enduits de revêtement un revêtement formé d'une matière réticulable par condensation en un élastomère, à base d'un polydiorganosiloxane contenant du copolymère en forme de bâtonnets, que l'on a obtenu par copolymérisation du styrène et d'un ester d'acide (méth)acrylique à l'aide de radicaux libres en présence d'un polydiorganosiloxane, enduits caractérisés en ce que le primaire d'apprêt comportant des restes organiques liés à SiC a été obtenu à partir d'une solution de

(a) un copolymère d'un ester d'acide (méth)acrylique, dépourvu d'atomes de Si, et d'un (méth)acryloxyalkylsilane comportant au moins un reste organique monovalent lié à SiOC, et

(b) un silane comportant un reste organique lié à SiC et comportant au moins un groupe amino ou imino et au moins un reste organique monovalent lié à SiOC ou un hydrolysat partiel d'un tel silane ou un tel silane et un hydrolysat partiel d'un tel silane, dans un solvant organique.

3. Procédé selon la revendication 1, ou enduit de revêtement selon la revendication 2, caractérisé en ce que pour produire le copolymère (a), on a utilisé comme ester d'acide (méth)acrylique dépourvu d'atomes de Si, un tel ester de formule:

$(H_2C{=}CRCOO)_nR^1$,

dans laquelle n vaut 1 ou 2, R représente un atome d'hydrogène ou le reste méthyle, et $R^1$ représente un reste d'hydrocarbure ayant 1 à 10 atomes de carbone, qui est monovalent, quand n vaut 1 et qui est divalent quand n vaut 2.

4. Procédé selon la revendication 1 ou 3 ou enduit de revêtement selon la revendication 2 ou 3, caractérisé en ce que, pour préparer le copolymère (a), on a utilisé comme (méth)acryloxyalkylsilane un tel composé de formule:

$H_2C{=}CRCOOR^2 R^3_mSi(OR^4)_{3-m}$

dans laquelle R a le sens indiqué à la revendication 3, $R^2$ représente un reste alkylène ayant 1 à 6 atomes de carbone, $R^3$ représente un reste d'hydrocarbure monovalent comportant 1 à 6 atomes de carbone, et $R^4$ représente un reste alkyle ayant 1 à 5 atomes de carbone, et m vaut 0, 1 ou 2.

5. Procédé selon la revendication 1, 3 ou 4 ou enduit de revêtement selon la revendication 2, 3 ou 4, caractérisé en ce que, pour préparer le constituant (a), on a utilisé 4 à 20 parties en poids de l'ester d'acide (méth)acrylique, dépourvu d'atomes de Si, par partie en poids de méthacryloxyalkylsilane.

6. Procédé selon la revendication 1 ou d'au moins l'une des revendications 3 à 5 ou enduit de revêtement selon la revendication 2 ou d'au moins l'une des revendications 3 à 5, caractérisé en ce qu'on a utilisé comme silane (b) un silane de formule

$R^5NHR^2Si(OR^6)_3$,

dans laquelle $R^2$ a le sens indiqué ci-dessus à la revendication 4, $R^5$ représente un atome d'hydrogène ou un groupe de formule $H_2N(CH_2)_p$ - (dans laquelle P vaut 2 ou 3) et $R^6$ représente un reste d'hydrocarbure monovalent, éventuellement substitué par un groupe amino ou alcoxy et ayant au total 1 à 10 atomes de carbone par reste.

7. Procédé selon la revendication 1 ou au moins l'une des revendications 3 à 6 ou enduit de revêtement selon au moins l'une des revendications 2 à 6, caractérisé en ce qu'on utilise le copolymère (a) en des quantités de 5 à 35 parties en poids par partie en poids du silane (b).

8. Procédé selon la revendication 1 ou au moins l'une des revendications 3 à 7 ou enduit de revêtement selon la revendication 2 ou au moins l'une des revendications 3 à 7, caractérisé en ce qu'on utilise comme solvant organique un mélange de toluène, d'isobutanol et éventuellement d'acétone.